# EUROPEAN PATENT APPLICATION

(11) **EP 4 711 608 A1**
(43) Date of publication of application: **18.03.2026**
(21) Application number: 24200540.3
(22) Date of filing: 16.09.2024
(51) Int. Cl.: F03D 1/06, F03D 80/40, H05B 3/34

(54) **A HEATING SYSTEM FOR A WIND TURBINE ROTOR BLADE**

(71) Applicant: Nordex Energy SE & Co. KG, 22419 Hamburg (DE)
(72) Inventor: Kremer, Jochen, 22419 Hamburg (DE); Lipka, Thomas, 22419 Hamburg (DE)
(74) Representative: Völkl Siebenson Patentanwälte - Partnerschaft mbB

(57) **Abstract**

A heating system for a wind turbine rotor blade comprising
• a plurality of heating elements to be installed in a row along a longitudinal direction,
• wherein each of the heating elements comprises a carrier layer and a heating conductor fastened to the carrier layer,
• wherein each carrier layer has a first edge facing the blade tip and a second edge facing the blade root, wherein
• the carrier layers along the first edge have a strip-shaped margin with a first width and along the second edge have a strip-shaped margin with a second width,
• for each pair of neighboring heating elements, a first edge of one of the heating elements is arranged adjacent to a second edge of the other one of the heating elements, and
• the first width and the second width are dimensioned to arrange the heating conductors of the pair of heating elements in a predetermined distance sufficient to prevent flashovers between the heating conductors.

## Description

The invention relates to a heating system for a wind turbine rotor blade.

EP 2 667 025 A1 discloses a wind turbine rotor blade with a heating mat having two segments running in parallel along a longitudinal direction of the wind turbine blade. To avoid a short circuit between the two segments, a layer of an insulating material is placed between the adjacent segments, wherein the layer is arranged underneath one of the two segments and on top of the adjacent segment.

EP 2 843 228 A1 discloses a wind turbine rotor blade with an electrical heating system including a plurality of electrical heating elements arranged on an outer surface of a wind turbine rotor blade. Each of the heating elements has a carrier layer and a heating conductor arranged on the carrier layer between two opposite edges of the heating element in a meandering pattern. The heating elements are arranged on an outer surface of a wind turbine rotor blade. Free ends of each heating conductor are connected to two electrical supply lines which are running along a length of the blade and also serve as lightning down conductors. In case of lightning, the heating elements shall provide potential equalization between the two lightning down conductors.

Departing therefrom, it is an object of the invention to provide a heating system for a wind turbine rotor blade that offers improved lightning protection while it is easy to install on an outer surface of a wind turbine rotor blade, and a related method.

This object is solved by the heating system of claim 1. Aspects of the invention are given in the dependent claims.

The heating system is designed for a wind turbine rotor blade which has a blade root, a blade tip, a suction side, a pressure side, a first electrical supply line arranged on the suction side, a second electrical supply line arranged on the pressure side, and an outer surface. The heating system comprises:
- a plurality of heating elements adapted to be installed in defined operating positions on the outer surface in a row along a longitudinal direction of the wind turbine rotor blade,
- wherein each of the heating elements comprises a carrier layer and a heating conductor fastened to the carrier layer,
- wherein the heating conductor has a first end adapted to be connected to the first electrical supply line and a second end adapted to be connected to the second electrical supply line,
- wherein, when the heating elements are arranged in the defined operating positions, each carrier layer has a first edge facing the blade tip and a second edge facing the blade root, characterized in that
- the carrier layers along the first edge have a strip-shaped margin with a first width and along the second edge have a strip-shaped margin with a second width,
- when the heating elements are arranged in the defined operating positions, for each pair of neighboring heating elements, a first edge of one of the heating elements of the pair is arranged adjacent to a second edge of the other one of the heating elements of the pair, and
- the first width and the second width are dimensioned to arrange the heating conductors of the pair of heating elements in a predetermined distance sufficient to prevent flashovers between the heating conductors.

The wind turbine rotor blade has an outer surface which corresponds to an aerodynamic surface of the wind turbine rotor blade. The wind turbine rotor blade may comprise a shell structure forming the outer surface, for example with two turbine rotor blade half shells, such as a pressure side half shell and a suction side half shell.

The heating system is supplied with heating power via first and second electrical supply lines which are arranged on a pressures side and a suction side, respectively. The heating system comprises a plurality of heating elements. Each heating element is to be connected to both electrical supply lines.

Each heating element is designed for being arranged on a specified area of the outer surface of the wind turbine rotor blade. The geometry of the heating element generally corresponds to this surface area. This surface area is referred to as the defined operating position of the heating element. The geometry may be rectangular or trapezoidal, for example, wherein the edges may be straight or curved. The heating elements may have the same geometry or may have different geometries. The heating element is a generally flat, flexible member, therefore sometimes referred to as a heating mat. The heating elements are adapted to be installed in a row along a longitudinal direction of the wind turbine rotor blade. The heating elements will be arranged side-by-side, so that a relatively large, coherent surface area will be covered by the plurality of the heating elements and can be heated.

The heating elements may be fastened to an outer surface of the wind turbine rotor blade, for example by means of an adhesive. However, it is also possible to place the heating elements in a mold for manufacturing a wind turbine rotor blade shell member and to integrate the heating elements into the shell member, for example by vacuum infusion of a resin.

When arranged on the wind turbine rotor blade, the surface area of the wind turbine rotor blade covered by the heating elements can be heated by a heating current supplied via the electrical supply lines of the wind turbine rotor blade. The heating current flowing through the heating conductors will heat the heating elements and the respective surface area of the wind turbine rotor blade in order to remove accumulated ice (de-icing) and/or in order to prevent the formation of ice (anti-icing) on this surface area.

The electrical supply lines of the wind turbine rotor blade are typically integrated into the corresponding wind turbine rotor blade shell members during production of the shell members. The electrical supply lines may also be fastened to a wind turbine rotor blade shell member or to the wind turbine rotor blade at a later point in time. The electrical supply lines may include one or more connection points for connecting the first and second ends of the respective heating conductors. A connection point may comprise for example a metal block, a thread or a clamp.

The heating elements comprise a carrier layer and at least one heating conductor fastened thereto. The carrier layer provides a basis for arranging the heating conductor in a desired configuration and allows simple handling of the heating element. When the heating elements are arranged in their defined operating positions, each carrier layer has a first edge facing the blade tip and a second edge facing the blade root. The first and second edges may be arranged essentially in a chordal plane and/or perpendicular to the longitudinal axis of the wind turbine rotor blade.

In accordance with the invention, each carrier layer has a strip-shaped margin with a first width along the first edge and a strip-shaped margin with a second width along the second edge. When the heating elements are arranged in the defined operating positions, for each pair of neighboring heating elements, a first edge of one of the heating elements of the pair is arranged adjacent to a second edge of the other one of the heating elements of the pair. These adjacent edges may abut one another.

However, in view of manufacturing tolerances, a small gap between adjacent edges is acceptable, as well as a small overlap of the adjacent carrier layers.

The first width and the second width are dimensioned to arrange the heating conductors of the pair of heating elements in a predetermined distance sufficient to prevent flashovers between the heating conductors. The predetermined distance may be, for example, in a range of about 20 mm to about 100 mm, but will depend in particular on the dimensions of the heating elements and the position of the electrical supply lines. The predetermined distance can be calculated based on assumptions on the amplitude and slew rate of a lightning current and the resulting voltages induced in the heating system, possibly taking into account other electrical parameters of the wind turbine rotor blade. In the alternative, it will also be possible to determine (or verify) the required distance experimentally.

A main advantage of the invention is that arranging of the heating elements in their defined operating positions will automatically ensure that the predetermined distance between neighboring heating conductors is observed, so that flashovers between the heating conductors are prevented when lightning strikes the wind turbine rotor blade and large potential differences occur between adjacent heating conductors.

At the same time, arranging of the heating elements is particularly easy because once a first heating element is in place, the position of the neighboring heating element can be found by just placing a first edge of the neighboring carrier layer adjacent a second edge of the carrier layer of the first heating element (or vice versa).

In an aspect, the strip-shaped margins are free of any heating conductors and any other electrically conductive elements. For example, the strip-shaped margins may consist of a non-conducting fiber material, such as for example glass fibers. This ensures the strip-shaped margins provide good electrical insulation between the neighboring heating conductors.

In an aspect each heating element has a length measured between its first edge and its second edge, wherein for each heating element, the first width plus the second width is in a range of 2 % to 4 % of the length of the heating element. The distance obtained between neighboring heating conductors is then, as a rule, large enough to prevent flashovers while not larger than required, so that smooth heating of the entire surface area covered by the heating elements is obtained.

In an aspect, the carrier layer comprises a fiber mesh. For this mesh, for example glass fibers may be used, but also any other fibers providing the required stability. Preferably, the fibers are electrically insulating fibers so that the heating current will flow in a defined manner exclusively through the heating conductor. Fiber mesh provides the required stability and shear stiffness helpful for handling of the heating element at low weight. The fiber mesh can also be mounted to the wind turbine rotor blade using proven technology such as lamination and/or vacuum infusion of a resin. In particular, the fiber mesh has a mesh size in the range of 1 mm to 10 mm, in particular in a range of 2 mm to 6 mm. This is a good compromise between stiffness and weight.

In an aspect, the first width and the second width comprises a defined number of mesh cells. This helps to provide stability to the carrier layer in the area of the strip-shaped margins and to facilitate handling of the heating elements, so that a well-defined distances between neighboring heating conductors are achieved in practice.

In an aspect, the heating conductor is fastened to the carrier layer by stitching with a stitching yarn. A yarn tension and/or a spacing between adjacent stiches can be selected such that the heating conductor is reliably fastened on the carrier layer. The stitches may be carried out in a continuous or noncontinuous form, for example in a zig-zag pattern. Overall, good and precise fastening of the heating conductor to the carrier layer is obtained, using proven technology.

In an aspect, the heating conductor comprises a metal heating wire. The cross-section of the metal heating wire and the electrical resistance of the metal can be selected such as to provide the required heating power at a given supply voltage.

In an aspect, the heating conductor comprises a bundle of carbon fibers. The bundle of carbon fibers may be a fiber roving. The cross-section may be selected to provide the required electrical properties.

In an aspect, the heating conductor in the main section is fastened to the carrier layer in a meandering pattern. In this way, substantially the entire area of the carrier layer, except for the strip-shaped margins, is covered with segments of the heating conductor, so that a substantially uniform heat distribution is obtained. However, it is also possible to use more than one heating conductor on one heating element. In this case, the heating conductors may be connected to the electrical supply lines of the wind turbine rotor blade in parallel, possibly using common first and second end sections. Each of the heating conductors may be fastened to the carrier layer such that a partial area covered by the carrier layer is provided with the desired heating power.

The above-stated object is also solved by the method of claim 10. An aspect is given in the dependent claim. The method is for installing a heating system for a wind turbine rotor blade, and comprises the following steps:
- providing a wind turbine rotor blade comprising a blade root, a blade tip, a suction side, a pressure side, a first electrical supply line arranged on the suction side, a second electrical supply line arranged on the pressure side, and an outer surface,
- providing a plurality of heating elements, wherein each of the heating elements comprises a carrier layer and a heating conductor fastened to the carrier layer, wherein each carrier layer has a first edge and a second edge, wherein the first edge has a strip-shaped margin with a first width and the second edge has a strip-shaped margin with a second width, wherein each heating conductor comprises a first end adapted to be connected to the first electrical supply line and a second end adapted to be connected to the second electrical supply line,
- arranging a first heating element on the outer surface, so that the first edge of the first heating element is facing the blade tip and the second edge of this heating element is facing the blade root,
- arranging a second heating element on the outer surface, so that the first edge of the second heating element is positioned adjacent the second edge of the first heating element,
- wherein the first width and the second width are dimensioned to arrange the heating conductors of the first heating element and the second heating element in a predetermined distance sufficient to prevent flashovers between the heating conductors.
- wherein the heating conductor comprises a first end adapted to be connected to the first electrical supply line and a second end adapted to be connected to the second electrical supply line.

With regard to the features and advantages of the method, reference is made to the description of the heating system, which applies correspondingly. It is to be noted that the steps of the method need not be carried out in the given order. In particular, it is also possible to arrange the second heating element on the outer surface first, followed by the second heating element.

In an aspect, further heating elements are arranged on the outer surface until all heating elements are arranged on the outer surface such that for each pair of neighboring heating elements, a first edge of one of the heating elements of the pair is arranged adjacent to a second edge of the other one of the heating elements of the pair.

In the following, the invention is explained in greater detail with reference to drawings:
- Fig. 1: shows a wind turbine rotor blade in a perspective view,
- Fig. 2: shows the wind turbine rotor blade of Fig. 1 in cross section,
- Fig. 3: shows a part of the wind turbine rotor blade of Fig. 2 in a schematic view,
- Fig. 4: shows an enlarged view of a section of Fig. 3.

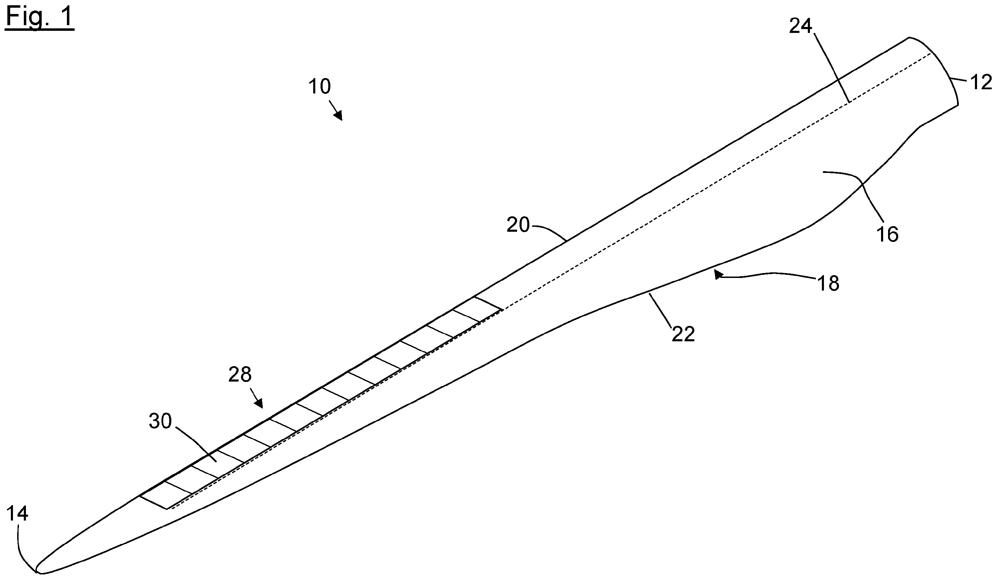

Figure 1 shows a wind turbine rotor blade 10 with a blade root 12, a blade tip 14, a suction side 16 and a pressure side 18. The suction side 16 and the pressure side 18 each extend between a leading edge 20 and a trailing edge 22.

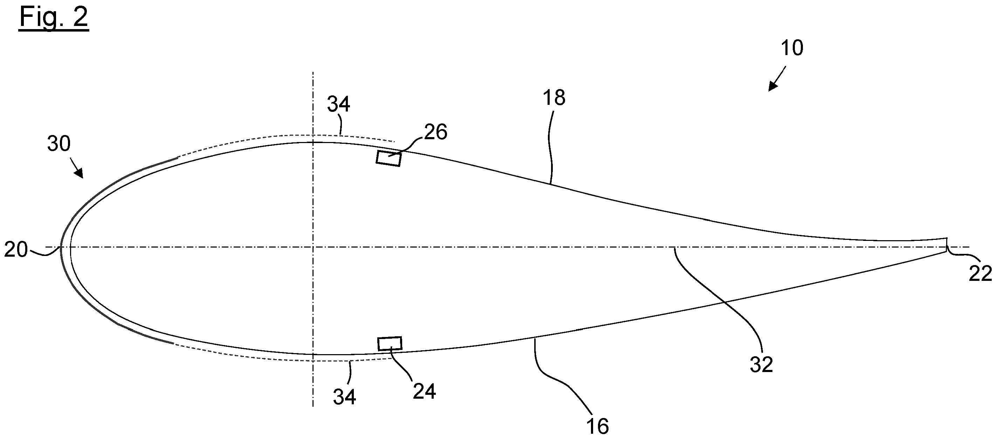

A first electrical supply line 24 is arranged on the suction side 16. A second electrical supply line 26 (see Fig. 2) is arranged on the pressure side 18. Both electrical supply lines 24, 26 extend in a longitudinal direction of the wind turbine rotor blade 10, from the blade root 12 towards the blade tip 14.

The wind turbine rotor blade 10 is provided with a heating system 28 comprising a plurality of heating elements 30. The heating elements 30 are arranged on the outer surface of the wind turbine rotor blade 10 in a row along the longitudinal direction.

Figure 2 shows a cross-section through the wind turbine rotor blade 10 at a longitudinal position including one of the heating elements 30. The wind turbine rotor blade 10 has a chord 32 extending between the leading edge 20 and the trailing edge 22. The heating element 30 extends over the leading edge 20 and covers a front section of the suction side 16 and a front section of the pressure side 18.

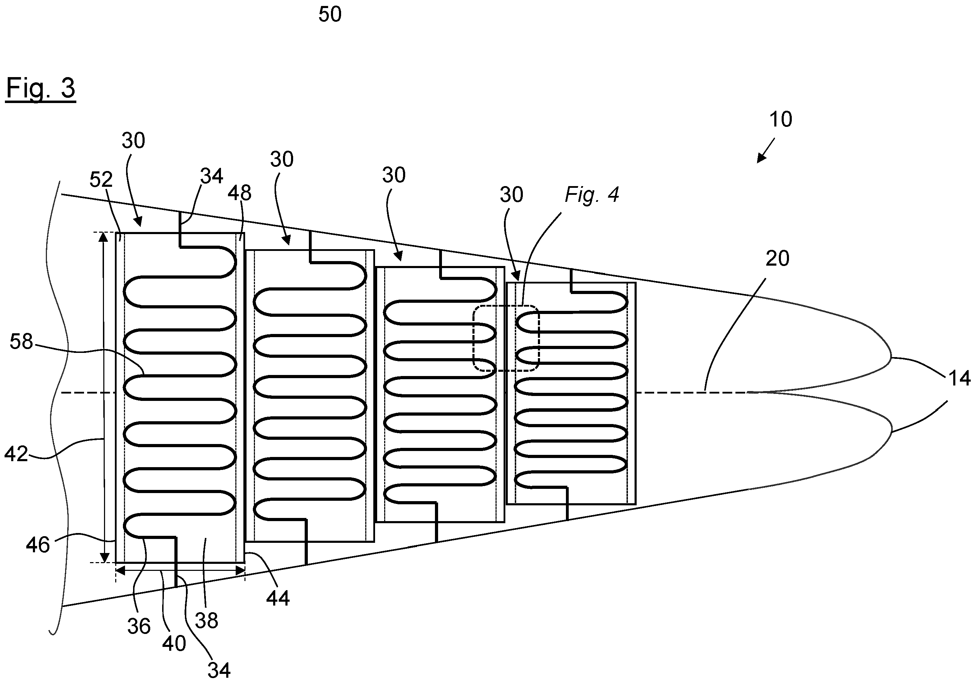

The first electrical supply line 24 is integrated in a wind turbine rotor blade half shell forming the suction side 16, the second electrical supply line 26 is integrated in a wind turbine rotor blade half shell forming the suction side pressure side 18. Each of the heating elements 30 is connected to the first electrical supply line 24 and to the second electrical supply line 26 by means of a connecting section 34 of a heating conductor 36 (see Fig. 3) so that the heating element 30 can be provided with a heating current.

Figure 3 shows a section of the wind turbine rotor blade 10 in a schematic view on the leading edge 20, whereas the two half shells forming the outer surface are shown unfolded so that one can appreciate the arrangement of the heating elements 30. The heating elements 30 are arranged on the outer surface in a row along the longitudinal direction. The illustrated arrangement of the heating elements 30 corresponds to the defined operating positions of the heating elements 30.

Each heating element 30 has a carrier layer 38 and a heating conductor 36 fastened thereto. The heating elements 30, in particular the carrier layers 38, have different geometries, each being approximately rectangular. The lengths 40 of the carrier layers 38 are all the same, they extend along the longitudinal direction of the wind turbine rotor blade 10 which essentially follows the leading edge 20 indicated in Fig. 3. The widths 42 of the carrier layers 38 vary, the heating element 30 closest to the blade tip 14 has the smallest width 42, the heating element 30 nearest the blade root 12 has the largest width 42.

The heating conductors 36 each have first and second connecting sections 34 which extend in the length direction of the carrier layer 38 beyond the carrier layer's edges arranged in the width-direction. These connecting sections 34 are connected to the first and second electrical supply lines 24, 26, respectively. A main section 58 of the heating conductor 36 is fastened to carrier layer 38 in a meandering pattern, so that heating power is distributed substantially over the entire area of the carrier layer 38.

Each carrier layer 38 has a first edge 44 facing the blade tip 14 and a second edge 46 facing the blade root 12. The first edge 44 and the second edge 46 are arranged along the width direction of the respective carrier layer 38, that is in a chordal plane. For each pair of neighboring heating elements 30, the first edge 44 of one of the heating elements 30 of the pair is arranged adjacent to the second edge 46 of the other one of the heating elements 30 of the pair.

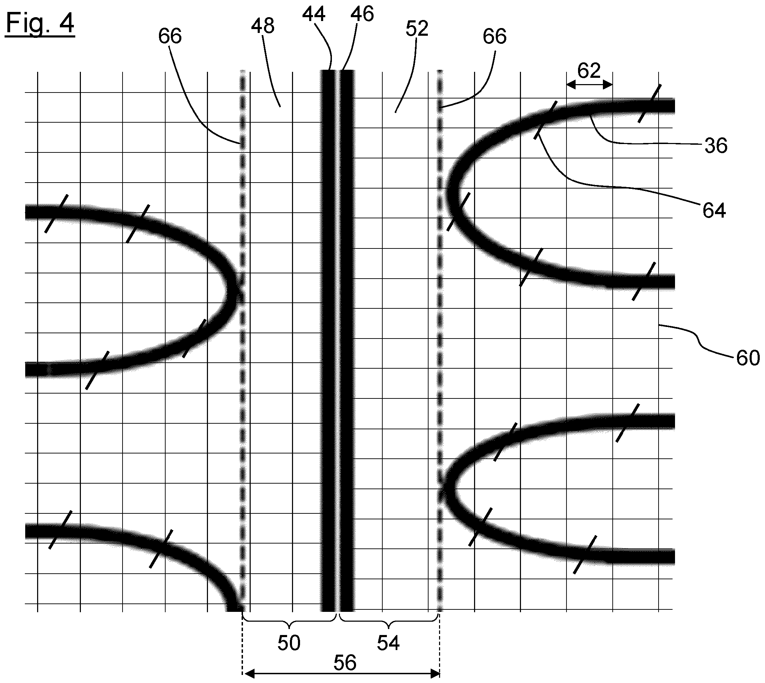

The carrier layers 38 each have a strip-shaped margin 48 with a first width 50 along the first edge 44 and a strip-shaped margin 52 with a second width 54 along the second edge 46. This can be seen most clearly in the enlarged view of Fig. 4. The first width 50 and the second width 54 are dimensioned to arrange the heating conductors 36 of the pair of heating elements 30 in a predetermined distance 56 sufficient to prevent flashovers between the heating conductors 36.

The enlarged view of Fig. 4 shows further details of the construction of the heating elements 30, namely a fiber mesh 60 having a mesh size 62. The heating conductor 36 is fastened to the carrier layer 38 by means of stitches 64. In Figs. 3 and 4, the strip-shaped margins 48, 52 are illustrated by imaginary, dashed lines 66 separating the strip-shaped margins 48, 52 from a remainder of the carrier layer 38 covered by the heating conductor 36.

### List of reference numerals

- 10: wind turbine rotor blade
- 12: blade root
- 14: blade tip
- 16: suction side
- 18: pressure side
- 20: leading edge
- 22: trailing edge 22
- 24: first electrical supply line
- 26: second electrical supply line
- 28: heating system
- 30: heating element
- 32: chord
- 34: connecting section
- 36: heating conductor
- 38: carrier layer
- 40: length (of carrier layer)
- 42: width (of carrier layer)
- 44: first edge
- 46: second edge
- 48: strip-shaped margin
- 50: first width
- 52: strip-shaped margin
- 54: second width
- 56: predetermined distance
- 58: main section
- 60: fiber mesh
- 62: mesh size
- 64: stitches
- 66: imaginary lines

## Claims

1. A heating system (28) for a wind turbine rotor blade (10), the wind turbine rotor blade (10) having a blade root (12), a blade tip (14), a suction side (16), a pressure side (18), a first electrical supply line (24) arranged on the suction side (16), a second electrical supply line (26) arranged on the pressure side (18), and an outer surface, wherein the heating system (28) comprises
• a plurality of heating elements (30) adapted to be installed in defined operating positionss on the outer surface in a row along a longitudinal direction of the wind turbine rotor blade (10),
• wherein each of the heating elements (30) comprises a carrier layer (38) and a heating conductor (36) fastened to the carrier layer (38),
• wherein the heating conductor (36) has a first end adapted to be connected to the first electrical supply line (24) and a second end adapted to be connected to the second electrical supply line (26),
• wherein, when the heating elements (30) are arranged in the defined operating positions, each carrier layer (38) has a first edge (44) facing the blade tip (14) and a second edge (46) facing the blade root (12), **characterized in that**
• the carrier layers (38) along the first edge (44) have a strip-shaped margin (48) with a first width (50) and along the second edge (46) have a strip-shaped margin (52) with a second width (54),
• when the heating elements (30) are arranged in the defined operating positions, for each pair of neighboring heating elements (30), a first edge (44) of one of the heating elements (30) of the pair is arranged adjacent to a second edge (46) of the other one of the heating elements (30) of the pair, and
• the first width (50) and the second width (54) are dimensioned to arrange the heating conductors (36) of the pair of heating elements (30) in a predetermined distance (56) sufficient to prevent flashovers between the heating conductors (36).

2. The heating system (28) of claim 1, wherein the strip-shaped margins (48, 52) are free of any heating conductors (36) and any other electrically conductive elements.

3. The heating system (28) of claim 1 or 2, wherein each heating element (30) has a length (40) measured between its first edge (44) and its second edge (46), wherein for each heating element (30), the first width (50) plus the second width (54) is in a range of 2 % to 4 % of the length (40) of the heating element (30).

4. The heating system (28) of any of the claims 1 to 3, wherein the carrier layer (38) comprises a fiber mesh (60).

5. The heating system (28) of claim 4, wherein the first width (50) and the second width (54) comprise a defined number of mesh cells (62).

6. The heating system (28) of any of the claims 1 to 5, wherein the heating conductor (36) is fastened to the carrier layer (38) by stitching with a stitching yarn.

7. The heating system (28) of any of the claims 1 to 6, wherein the heating conductor (36) comprises a metal heating wire.

8. The heating system (28) of any of the claims 1 to 6, wherein the heating conductor (36) comprises a bundle of carbon fibers.

9. The heating system (28) of any of the claims 1 to 8, wherein the heating conductor (36) in a main section (58) is fastened to the carrier layer (38) in a meandering pattern.

10. A method of installing a heating system (28) for a wind turbine rotor blade (10), the method comprising the following steps:
• providing a wind turbine rotor blade (10) comprising a blade root (12), a blade tip (14), a suction side (16), a pressure side (18), a first electrical supply line (24) arranged on the suction side (16), a second electrical supply line (26) arranged on the pressure side (18), and an outer surface,
• providing a plurality of heating elements (30), wherein each of the heating elements (30) comprises a carrier layer (38) and a heating conductor (36) fastened to the carrier layer (38), wherein each carrier layer (38) has a first edge (44), a second edge (46), a strip-shaped margin (48) along the first edge (44) with a first width (50) and a strip-shaped margin (52) along the second edge (46) with a second width (54), wherein each heating conductor (36) comprises a first end adapted to be connected to the first electrical supply line (24) and a second end adapted to be connected to the second electrical supply line (26),
• arranging a first heating element (30) on the outer surface, so that the first edge (44) of the first heating element (30) is facing the blade tip (14) and the second edge (46) of this heating element (30) is facing the blade root (12),
• arranging a second heating element (30) on the outer surface, so that the first edge (44) of the second heating element (30) is positioned adjacent the second edge (46) of the first heating element (30),
• wherein the first width (50) and the second width (54) are dimensioned to arrange the heating conductors (36) of the first heating element (30) and the second heating element (30) in a predetermined distance (56) sufficient to prevent flashovers between the heating conductors (36).

11. The method of claim 10, wherein further heating elements (30) are arranged on the outer surface until all heating elements (30) are arranged on the outer surface such that for each pair of neighboring heating elements (30), a first edge (44) of one of the heating elements (30) of the pair is arranged adjacent to a second edge (46) of the other one of the heating elements (30) of the pair.
